(19) Europäisches Patentamt
European Patent Office
Office européen des brevets

(11) **EP 2 587 636 B1**

(12) **EUROPÄISCHE PATENTSCHRIFT**

(45) Veröffentlichungstag und Bekanntmachung des Hinweises auf die Patenterteilung:
**16.01.2019 Patentblatt 2019/03**

(51) Int Cl.:
**H02K 3/12** (2006.01)  **H02K 26/00** (2006.01)
**F16C 32/04** (2006.01)

(21) Anmeldenummer: **12190053.4**

(22) Anmeldetag: **25.10.2012**

(54) **Elektrische Maschine, insbesondere bürstenloser Torquemotor**

Electrical machine, in particular brushless torque motor

Machine électrique, notamment moteur à couple sans balais

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.10.2011 AT 15782011**

(43) Veröffentlichungstag der Anmeldung:
**01.05.2013 Patentblatt 2013/18**

(73) Patentinhaber: **LINZ CENTER OF MECHATRONICS GMBH**
**4040 Linz (AT)**

(72) Erfinder:
• **Silber, Siegfried**
**4202 Kirchschlag (AT)**
• **Grabner, Herbert**
**4060 Leonding (AT)**

(74) Vertreter: **Jell, Friedrich**
**Bismarckstrasse 9**
**4020 Linz (AT)**

(56) Entgegenhaltungen:
**DE-A1- 2 537 597**   **JP-A- 2007 209 186**
**US-A1- 2006 022 544**

**Beschreibung**

Die Erfindung betrifft eine elektrische Maschine, insbesondere bürstenloser Torquemotor, mit einem drehbar gelagerten Läufer, der mindestens einen Permanentmagneten aufweist, und mit einem, elektromagnetische Pole ausbildenden Stator, der ein wenigstens magnetisch leitfähiges Joch und wenigstens vier unterschiedliche Wicklungsstränge einer Statorwicklung aufweist, wobei diese Wicklungsstränge mit mindestens einem Permanentmagneten des Läufers zur gleichzeitigen Ausbildung eines Drehmoments und einer Querkraft zusammenwirken.

Um bei einer elektrischen Maschine über eine Statorwicklung sowohl Drehmoment, als auch Tragkräfte zur magnetischen Lagerung des Läufers gegenüber dem Stator erzeugen zu können, ist aus dem Stand der Technik bekannt (DE19726352A, EP1301979B1), im Stator vier bzw. fünf Zahnspulen anzuordnen, über deren Durchflutungsverteilung eine Querkraft bzw. Tragkraft in x- und y-Richtung, sowie ein Drehmoment erzeugt werden kann. Nachteilig bei einer derartigen Spulenanordnung ist deren vergleichsweise geringe Leistungsdichte, insbesondere bei niedrigen Drehzahlen. Eine Erhöhung dieser Leistungsdichte durch Steigerung der Anzahl an magnetischen Polen im Stator führt jedoch meist zu einem Verlust der Möglichkeit, Drehmoment und Querkraft gleichzeitig zur Verfügung stellen zu können. Hinzu kommt, dass bei derartigen Maschinen Sensoren zur Regelung der Drehmoment- und Querkraftbildung benötigt werden, was wiederum konstruktionsbedingt zu einer Schwächung der Leistungsdichte führen kann. Außerdem ist es vergleichsweise konstruktiv aufwendig, derartige Sensoren im Bereich der Statorwicklung der elektrischen Maschine vorzusehen. Weiterer Stand der Technik ist DE 25 37 597.

Es ist daher die Aufgabe der Erfindung, eine elektrische Maschine der eingangs geschilderten Art derart auf konstruktiv einfache Weise zu verändern, dass trotz hoher Leistungsdichte auch bei niedrigen Drehzahlen des Läufers, eine gleichzeitige Ausbildung von Drehmoment und Querkraft möglich ist. Die Erfindung ist eine elektrische Maschine gemäss dem unabhängigen Anspruch 1. Weitere Ausführungsformen der Erfindung sind Gegenstand der abhängigen Ansprüche 2 - 13.

Die Erfindung löst die gestellte Aufgabe dadurch, dass die Wicklungsstränge je mindestens zwei elektrisch miteinander verbundene Spulen aufweisen, wobei bei wenigstens einem Wicklungsstrang seine Spulen, vorzugsweise bei allen Wicklungssträngen deren jeweiliger Spulen, innerhalb einer Statoreinteilung von 360 Grad geteilt durch die Anzahl an Wicklungssträngen angeordnet sind.

Weisen die Wicklungsstränge je mindestens zwei elektrisch miteinander verbundene Spulen auf, so kann damit bekanntermaßen die Anzahl an Polen im Stator erhöht werden. Außerdem können damit die Flusswege kurz und damit vorteilhaft ein Statorjoch dünn bzw.

schlank gehalten werden, wodurch mit verminderten Jochdicken ein Auslangen gefunden werden kann. Um dennoch aber eine hohe Polzahl für eine ausreichende Querkraftbildung ermöglichen zu können, schlägt die Erfindung weiter vor, dass bei wenigstens einem Wicklungsstrang seine Spulen innerhalb einer Statoreinteilung von 360 Grad geteilt durch die Anzahl an Wicklungssträngen angeordnet sind. Zu diesem Zweck können die Wicklungsstränge bzw. Motorstränge einzeln angesteuert oder vorzugsweise für eine weitere konstruktive Einfachheit im Stern oder Ring verschaltet werden - wobei für die Stern- oder Ringverschaltung eine vergleichsweise einfache Ansteuerungselektronik ausreichen kann. Durch die erwähnte Anordnung der Wicklungsstränge in der erfindungsgemäßen Statoreinteilung kann sich außerdem eine besonders effiziente Krafterzeugung aufgrund einer hauptsächlichen Verwendung radialer Komponenten der Maxwellkräfte ergeben. Außerdem können die derart angeordneten Spulen der Wicklungsstränge zu einer vergleichsweise guten lokalen Schwächung bzw. Stärkung der Flussdichten führen, was sich im Wesentlichen durch das Anordnen der Spulen in einer Statoreinteilung ergibt. Dieser Effekt kann zu Ausbildung von erhöhten Querkräften selbst bei niedrigen Drehzahlen genutzt werden, was die elektrische Maschine neben hoher Drehmomentausbildung zur Verfügung stellen kann. Dies kann insbesondere für einen bürstenlosen Torquemotor von Vorteil sein. Die erfindungsgemäße permanentmagnetisch erregte elektrische Maschine kann daher eine vergleichsweise leistungsarme und auch gleichzeitige Erzeugung von Drehmomenten und Querkräften durch die Wicklungsstränge ermöglichen, zusätzlich jedoch damit im Gegensatz zum Stand der Technik auch eine konstruktive Einfachheit samt daraus folgenden geringen Herstellungskosten sicherstellen - alleine die Verschaltung der Wicklungsstränge innerhalb der Statorteilung kann bereits eine Vereinfachung bedeuten. Hierfür sind vorzugsweise bei allen Wicklungsstränge deren jeweiligen Spulen innerhalb einer Statoreinteilung von 360 Grad geteilt durch die Anzahl an Wicklungssträngen angeordnet. Die erfindungsgemäße elektrische Maschine vereint daher nicht nur die Möglichkeit einer gleichzeitigen Erzeugung von Drehmomenten und zusätzlichen Querkräften, sondern kann auch durch eine äußerst flexibel anpassbare Polzahl selbst bei vergleichsweise geringen Drehzahlen eine hohe Leistungsdichte ermöglicht.

Ist zwischen Läufer und Stator eine magnetische Lagerung vorgesehen, dann kann die konstruktive Einfachheit der elektrischen Maschine weiter erhöht werden, indem die durch ein Zusammenwirken von Wicklungssträngen und Permanentmagneten erzeugte Querkraft eine Tragkraft für die magnetische Lagerung ausbildet. Kostenvorteile hinsichtlich geringen Materialaufwands können so unter anderem genutzt werden.

Eine besonders hohe Laufruhe bzw. ein besonders geringes Nutrasten können sich einstellen, wenn die Wicklungsstränge als nutenlose Luftspaltwicklung ausgeführt sind.

Vorteilhafte Konstruktionsverhältnisse können sich ergeben, wenn die Statorwicklung als Zahnspulenwicklung einschichtig oder zweischichtig ausgeführt ist. Damit kann entweder die Anzahl an Spulen oder die Baugröße der elektrischen Maschine entsprechend den vorgegebenen Anforderungen optimiert werden.

Sind die Wicklungsstränge in einer Sternschaltung, vorzugsweise mit herausgeführtem Sternpunkt, elektrisch miteinander verbunden, dann kann in Hinblick auf die Leistungselektronik unter anderem eine konstruktive Einfachheit ermöglicht werden.

Um hohen Drehzahlen der elektrischen Maschine standhalten zu können, kann vorgesehen sein, anstatt einer Bandaschierung des Läufers die Permanentmagneten im Läufer einzubetten. Im Vergleich dazu bieten oberflächenmontierte Permanentmagneten die Möglichkeit einer verminderten Induktivität für eine höhere Drehzahl und so für einen verbesserten Leistungsfaktor.

Die Konstruktionsverhältnisse können weiter vereinfacht werden, wenn ein halbach-magnetisierter, vorzugsweise einstückiger Permanentmagnet den Läufer ausbildet.

Weist der Läufer eine sich in Abhängigkeit des Rotorwinkels verändernde Reluktanz auf, dann kann die Energieeffizienz der elektrischen Maschine vor allem bei reduzierten Magnetvolumina noch weiter gesteigert werden.

Durch die erfindungsgemäße An- bzw. Zuordnung der Wicklungsstränge je einer Statoreinteilung, kann sich auf konstruktiv einfache Weise die Möglichkeit eröffnen, an wenigstens einer Statoreinteilung mindestens einen Sensor, insbesondere einen Positions- und/oder Drehwinkelsensor, anzuschließen. Diese konstruktive Einteilung bietet die Vorteile, den Sensor einfach im Stator platzieren bzw. diesen für Wartungszwecke leicht zugänglich halten zu können.

Vorteilhaft kann der Läufer je nach seinen konstruktiven Anforderungen als Innen- oder als Außenläufer ausgebildet sein.

Für eine vergleichsweise optimale Motorausnutzung wird vorgeschlagen, dass zwischen der Anzahl der Nuten (N) und der Anzahl der Rotorpolpaare (p) die Beziehung p=N/2+1 oder p=N/2-1 für eine gerade Anzahl an Nuten (N) bzw. p=(N+1)/2 oder p=(N-1)/2 für eine ungerade Anzahl an Nuten (N) gilt, wenn die Anzahl der Nuten (N) ein ganzzahliges Vielfaches der Anzahl der Wicklungsstränge ist. Damit kann eine Vorschrift gegeben werden, wie trotz hoher Wicklungsfaktoren für eine vergleichsweise hohe Drehmomentenausbildung auch vergleichsweise hohe Querkräfte erzeugt werden können. Je nach Bedarf bzw. Vorgaben entsprechend kann so durch eine Wahl von p (Rotorpolpaar) oder der Anzahl der Nuten (N) eine Anleitung zur Ausbildung einer vorteilhaften Motorausnutzung geschaffen werden.

Gilt zwischen der Anzahl der Nuten (N) und der Anzahl der Rotorpolpaare (p) die Beziehung p=N/2, dann kann sich eine einfache Konstruktionsvorschrift für Mehrphasenmotoren ergeben, wenn die Anzahl der Nuten (N) ein ganzzahliges Vielfaches der Anzahl der Wicklungsstränge ist.

Die Neigung zu Nutrasten kann vermindert werden, wenn der Luftspalt zwischen der Läuferoberfläche und dem Stator derart verläuft, dass eine Reduktion eines Rastmoments eintritt. Dazu kann der Luftspalt eine optimierte geometrische Struktur aufweisen, vorzugsweise in dem der Luftspalt einem sinusförmigen Verlauf der Läuferoberfläche, gebildet wenigstens teilweise durch die jeweiligen Permanentmagneten, folgt.

Insbesondere können störende Harmonische in der Drehmoment- und/oder Querkraftausbildung vermindert werden, wenn an der Weite der Statoreinteilung Veränderungen vorgenommen werden. Hierzu ist lediglich die Weite der Statoreinteilung einzustellen, in welchem Bereich die Spulen des jeweiligen Wicklungsstrangs angeordnet werden müssen.

In den Zeichnungen ist beispielsweise der Erfindungsgegenstand anhand von Ausführungsbeispielen dargestellt. Es zeigen

Fig. 1    eine elektrische Maschine mit einer zweischichten Zahnspulenwicklung,

Fig. 2    eine weitere elektrische Maschine mit einer zweischichtigen Zahnspulenwicklung,

Fig. 3    eine vergrößerte Teilansicht der nach Fig. 2 dargestellten elektrischen Maschine,

Fig. 4    eine weitere elektrische Maschine nach einem dritten Ausführungsbeispiel,

Fig. 5    eine viertes Ausführungsbeispiel zu einer elektrischen Maschine mit einem Außenläufer und

Fig. 6    eine weitere elektrische Maschine mit einer einschichtigen Zahnspulenwicklung nach einem fünften Ausführungsbeispiel.

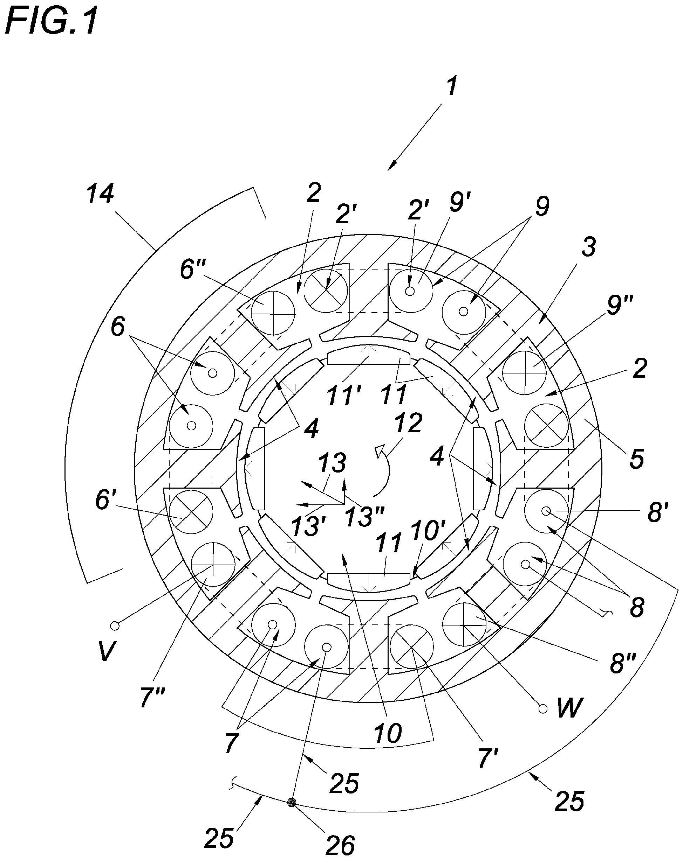

Die in Fig. 1 dargestellte Maschine 1 weist eine Statorwicklung 2 auf, die als zweischichtige Zahnspulenwicklung ausgeführt ist. Der Stator 3 bildet weiter Pole 4 aus, die über ein elektromagnetisch leifähiges Statorjoch 5 rückgeschlossen sind. Die Statorwicklung 2 weist vier unterschiedliche Wicklungsstränge 6, 7, 8 und 9 auf, die mit dem gegenüber dem Stator 3 drehbar gelagerten Läufer 10 bzw. seinen Permanentmagneten 11 zu einer gleichzeitigen Erzeugung von Drehmoment 12 und Querkraft 13 zusammenwirken, wobei sich die resultierende Querkraft 13 aus den beiden orthogonalen Kraftkomponenten 13' und 13" zusammensetzt. Für diese Funktion ist in der Fig. 1 beispielsweise die sich in der Ausrichtung abwechselnde Magnetisierungsrichtung 11' der Permanentmagneten 11 und die Stromflussrichtung 2' durch die Statorwicklung 2 eingezeichnet. Für eine möglichst hohe Motorausnutzung wurde die Polpaarzahl mit p=N/2 gewählt, wodurch keine Sehnung auftritt und die induzierte Spannung maximiert wird. Diese elektrische Maschine 1 weist damit die technischen Daten

Anzahl der Wicklungsstränge (m)=4,

Anzahl der Nuten (N)=8 und
Anzahl der Läufer-Polpaare (p)=4 auf.

Um nun eine leistungsarme Erzeugung dieses Drehmoments 12 und der Querkraft 13 zu ermöglichen, werden jedem Wicklungsstrang 6, 7, 8 und 9 je zwei elektrisch miteinander verbundene Spulen 6', 6" bzw. 7', 7" bzw. 8', 8" bzw. 9', 9" zugeordnet und diese Spulen 6', 6" bzw. 7', 7" bzw. 8', 8" bzw. 9', 9" jeweils innerhalb einer Statoreinteilung 14 von 360 Grad geteilt durch die Anzahl an Wicklungssträngen 6, 7, 8 und 9 angeordnet. Die in Fig. 1 vorgestellte Startoreinteilung 14 weist somit 90 Grad auf. Derartig angeordnete Spulen 6', 6" bzw. 7', 7" bzw. 8', 8" bzw. 9', 9" der Wicklungsstränge 6, 7, 8 und 9 führen zu einer vergleichsweise guten lokalen Schwächung bzw. Stärkung der jeweiligen Flussdichten, so dass eine hohe Effizienz in der Krafterzeugung ermöglicht werden kann.

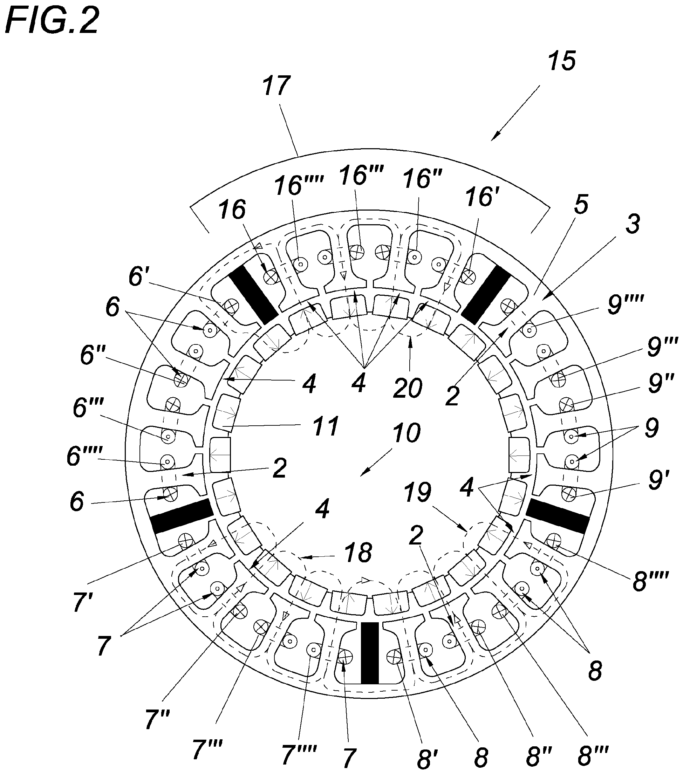

Gemäß Fig. 2 ist ein weiteres Ausführungsbeispiel einer elektrischen Maschine 15 dargestellt. Im Gegensatz zur nach Fig. 1 dargestellten elektrischen Maschine 1 weist diese elektrischen Maschine 15 eine Statorwicklung 2 mit fünf Wicklungssträngen 6, 7, 8, 9 und 16 auf. Den Wicklungssträngen 6, 7, 8, 9 und 16 sind je vier Zahnspulen 6', 6", 6''', 6'''' bzw. 7', 7", 7''', 7'''' bzw. 8', 8", 8''', 8'''' bzw. 9', 9", 9''', 9'''' bzw. 16', 16", 16''', 16'''' zugeordnet. Diese elektrische Maschine 15 weist sohin die technischen Daten

Anzahl der Wicklungsstränge (m)=5,
Anzahl der Nuten (N)=20 und
Anzahl der Läufer-Polpaare (p)=11 auf.

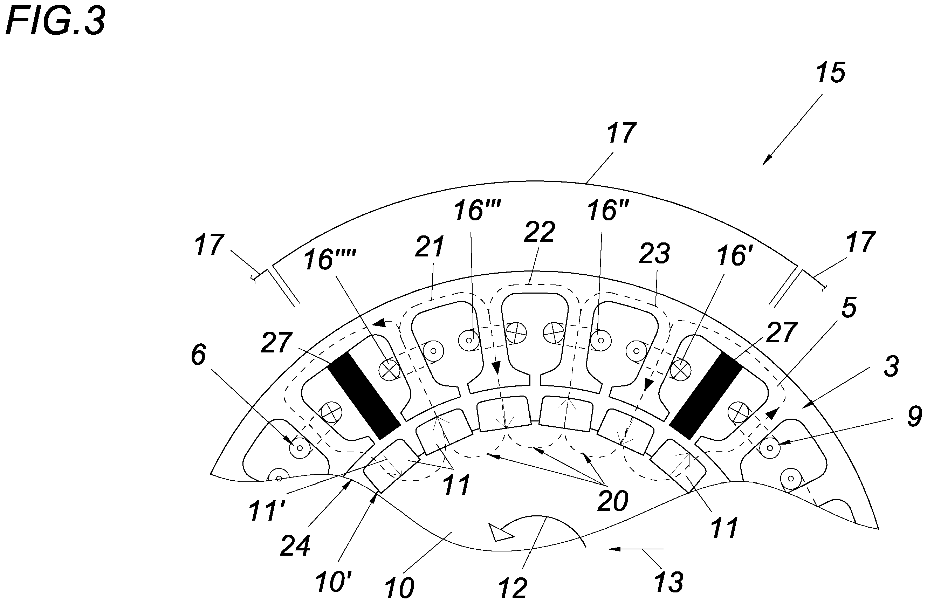

Die Zahnspulen 6', 6", 6''', 6'''' bzw. 7', 7", 7''', 7'''' bzw. 8', 8", 8''', 8'''' bzw. 9', 9", 9''', 9'''' bzw. 16', 16", 16''', 16'''' sind innerhalb der Statoreinteilung 17 angeordnet. Bei fünf Wicklungssträngen 6, 7, 8, 9 und 16 ergeben sich somit 72 Grad für die Statoreinteilung 17. Beispielsweise sind in der Fig. 2 zu drei Wicklungssträngen 7, 8 und 16 deren jeweiligen elektromagnetischen Flüsse 18, 19, 20 eingezeichnet. Davon ist der elektromagnetische Fluss 20 im Detail nach Fig. 3 vergrößert dargestellt. Die vier Zahnspulen 16', 16", 16''' und 16'''' sind derart bestromt, dass sich damit die elektromagnetischen Flüsse 21, 22 und 23 einstellen. Dadurch kann sich eine besonders effiziente Krafterzeugung aufgrund einer hauptsächlichen Verwendung radialer Komponenten der Maxwellkräfte ergeben. Wie in Fig. 3 weiter erkennbar ist, führt die strikte Statoreinteilung 17 der Wicklungsstränge 6, 7, 8, 9 und 16 zur einer hervorragenden lokalen Schwächung bzw. Stärkung der Flussdichten. Die elektromagnetischen Flüsse 21, 22 und 23 sind nämlich durch ihre kurzen Flusswege hochkonzentriert, was für eine vergleichsweise hohe Erzeugung von Drehmoment 12 und Querkraft 13 auch bei geringen Drehzahlen genutzt werden kann. Außerdem kann auf Grundlage der kurzen Flusswege das Statorjoch 5 vorteilhaft dünn bzw. schlank gehalten werden, wodurch ein vergleichsweise großer Durchmesser am Läufer 10 für eine hohe Drehmomenterzeugung genützt werden kann. Eine vergleichsweise leistungsarme und hohe Erzeugung von Drehmomenten 12 und Querkräften 13 samt einer konstruktiven Einfachheit der elektrischen Maschine 15 verbunden mit den Vorteilen an geringen Herstellungskosten kann dadurch ermöglicht werden.

Vorteilhaft wird die Querkraft 13, die nicht zur Erzeugung des Drehmoments 12 verwendet wird, zur magnetischen Lagerung 24 des Läufers 10 herangezogen. Damit können die Wicklungsstränge 6, 7, 8, 9, 16 der jeweiligen elektrischen Maschine 1, 15 für eine konstruktive Einfachheit Drehmoment 12 und Lagerkräfte ausbilden.

Nach Fig. 1 erfolgt die Verschaltung der Wicklungsstränge 6, 7, 8 und 9 in einer Sternschaltung 25 und zwar mit herausgeführtem Sternpunkt 26 beispielsweise teilweise dargestellt. Wie zu erkennen ist, ist diese Verschaltung vergleichsweise konstruktiv einfach zu lösen, da die nebeneinander liegenden Zahnspulen 6', 6" bzw. 7', 7" bzw. 8', 8" bzw. 9', 9" einfach verschaltet werden können. Ebenso sind der Fig. 1 beispielsweise die Motorphasen V und W zu entnehmen.

In den Figuren 1 und 3 ist außerdem erkennbar, dass die Permanentmagneten 11 an der Läuferoberfläche 10' befestigt sind. Diese Art der Befestigung der Permanentmagneten 11 ermöglicht vergleichsweise geringe Läuferabmessungen. Der Konturenverlauf der Läuferoberfläche 10' schafft auch eine sich in Abhängigkeit des Rotorwinkels verändernde Reluktanz des Läufers 10. Damit kann die Effizienz der elektrischen Maschine 1, 15 noch weiter gesteigert werden.

Die für jeden Wicklungsstrang 6, 7, 8, 9 und 16 eigens vorgesehene Statoreinteilung 17 schießt an beiden Enden an einen Sensor 27 an. Mit Hilfe dieser Sensoren 27 kann eine Position bzw. auch ein Drehwinkel des Läufers gegenüber dem Stator 3 festgestellt werden. Durch diese strikte Statoreinteilung 17 der Zahnspulen 6', 6", 6''', 6'''' bzw. 7', 7", 7''', 7'''' bzw. 8', 8", 8''', 8'''' bzw. 9', 9", 9''', 9'''' bzw. 16', 16", 16''', 16'''' sind diese Sensoren 17 unbehindert im Stator 3 vorsehbar. Beispielsweise können dazu auch Zahnlücken zum Einbringen der Sensoren 27 verwendet werden.

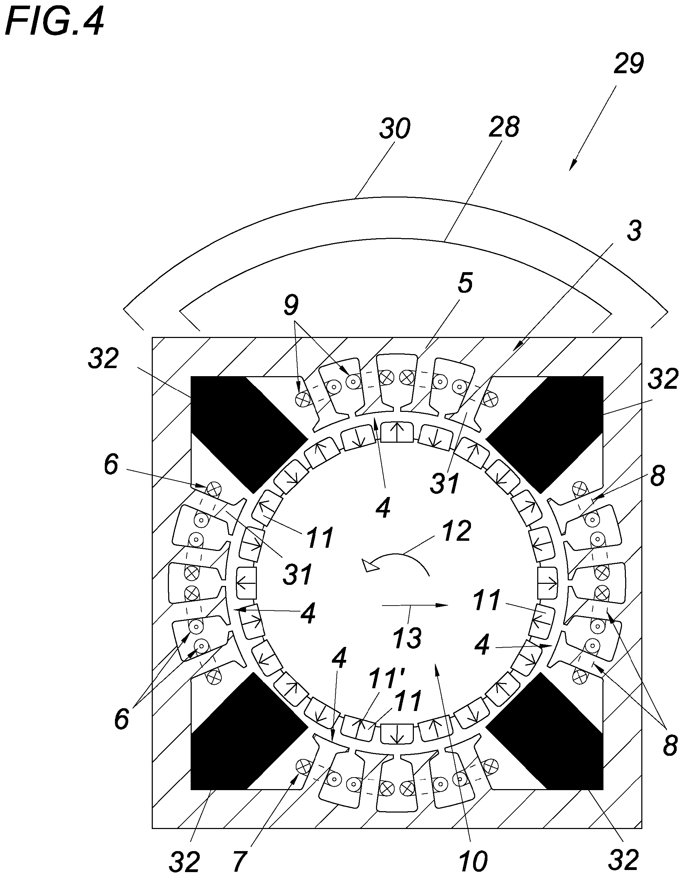

Es ist aber auch möglich, einen vergleichsweise großen Freiraum zu schaffen, indem einer nach Fig. 4 dargestellte Statoreinteilung 28 der Wicklungsstränge 6, 7, 8, 9 gefolgt wird. Diese nach Fig. 4 dargestellte elektrische Maschine 29 weist folgende technischen Daten auf:

Anzahl der Wicklungsstränge (m)=4,
Anzahl der Nuten (N)=20 und
Anzahl der Läufer-Polpaare (p)=12.

Die Statoreinteilung 28 ist kleiner der maximal zulässigen Statoreinteilung 30, die sich aus 360 Grad geteilt durch die Anzahl an Wicklungssträngen 6, 7, 8, 9 bestimmt. Für diesen großen Freiraum kann beispielsweise eine Vielzahl an Statorzähnen 31 weggelassen, und so auch eine eckige Bauform der elektrischen Maschine 29 ermöglicht werden - trotzdem kann aber die Funktion der gleichzeitigen Ausbildung von Drehmoment 12 und Querkraft 13 beibehalten werden. Diese Zahnlücken können wieder ausreichend Platz zum konstruktiv einfachen Einfügen von Sensoren 32 schaffen. Außerdem kann so auch die Weite der Statoreinteilung 28 gegenüber der maximal zulässigen Statoreinteilung 30 derart gewählt werden, dass sich störende Harmonische in der gleichzeitigen Ausbildung von Drehmoment 12 und/oder Querkraft 13 vermindern. Eine besonders vorteilhafte elektrische Maschine 29 kann so geschaffen werden. Natürlich kann diese Maßnahme auch bei den anderen elektrischen Maschinen 1, 15, 33 und 37 ergriffen werden.

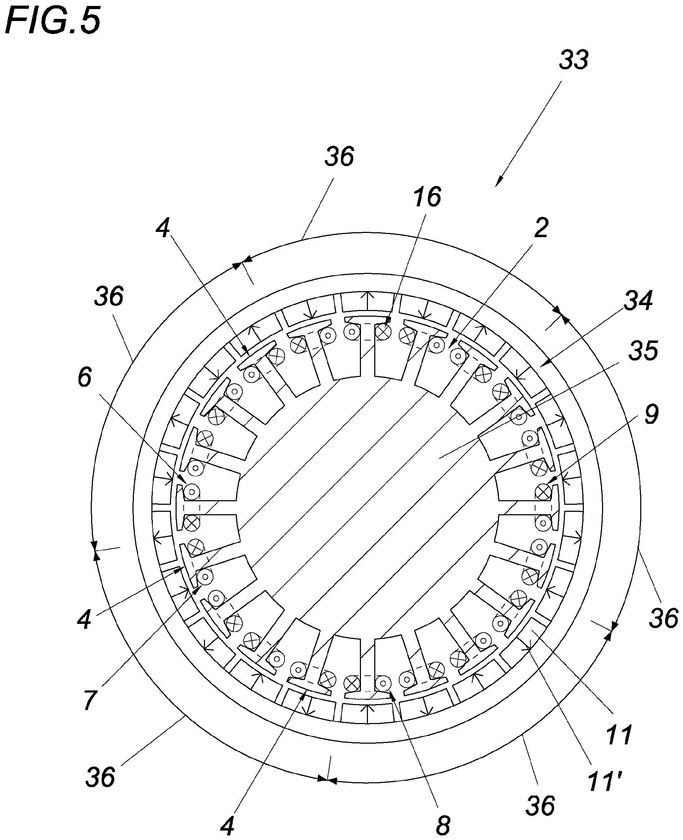

Nach Fig. 5 wird eine weitere Ausführungsform einer elektrischen Maschine 33 gezeigt. Diese elektrische Maschine 33 weist folgende technischen Daten auf:

Anzahl der Wicklungsstränge (m)=5,
Anzahl der Nuten (N)=20 und
Anzahl der Läufer-Polpaare (p)=11.

Der Läufer 34 der elektrischen Maschine 33 ist als Außenläufer ausgebildet. Der Stator 35 trägt eine Statorwicklung 2, die als Zweischichtwicklung ausgeführt ist. Der Stator 35 bildet - wie aus den vorhergehenden Ausführungsbeispielen bekannt, Pole 4 aus. Die dargestellte Statoreinteilung 36, die sich ebenso aus 360 Grad geteilt durch die Anzahl an Wicklungssträngen 6, 7, 8, 9 und 16 bestimmt, beträgt somit 72 Grad.

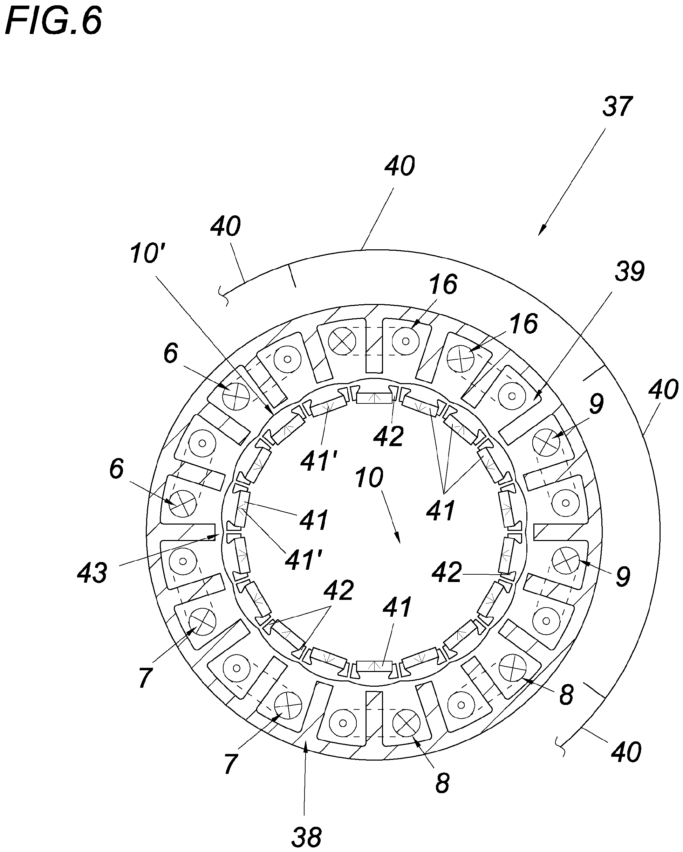

Die nach Fig. 6 dargestellte elektrische Maschine 37 weist an seinem Stator 38 eine einschichtige Statorwicklung 39 auf, die als Zahnspulenwicklung ausgeführt ist. Diese elektrische Maschine 37 ist charakterisiert durch folgende technische Daten:

Anzahl der Wicklungsstränge (m)=5,
Anzahl der Nuten (N)=20 und
Anzahl der Läufer-Polpaare (p)=9.

Die Statoreinteilung 40 für die jeweiligen Spulen der Wicklungsstränge 6, 7, 8, 9 und 16 bestimmt sich auch hier durch 360 Grad geteilt durch die Anzahl an Wicklungssträngen 6, 7, 8, 9 und 16, was zu 72 Grad führt. Der als Innenläufer ausgebildete Läufer 10 weist zum Unterschied zu den nach Fig. 1, 2, 4 und 5 dargestellten elektrischen Maschinen 1, 15, 29 und 33 eingebettete Permanentmagneten 41 mit deren jeweiligen Magnetisierungsrichtung 41' auf. Den Permanentmagneten 41 sind Flusssperren 42 zugeordnet, um magnetische Kurzschlüsse zu reduzieren.

Außerdem ist die Form der Läuferoberfläche 10' des Läufers 10 einem sinusförmigen Verlauf entsprechend ausgeführt, um damit ein eventuelles Rastmoment verringern zu können. Damit kann der Luftspalt 43 zwischen der Läuferoberfläche 10' und dem Stator 38 derart verlaufen, dass eine Reduktion eines Rastmoments eintritt. Dies kann unter anderem auch dadurch erreicht werden, in dem dieser dem sinusförmigen Verlauf der Läuferoberfläche 10' gebildet wenigstens teilweise durch die jeweiligen Permanentmagneten 11 folgt, was der Fig. 1 entnommen werden kann.

Die in Fig. 5 und Fig. 6 gewählten Konfigurationen an Nutenzahl und Polpaarzahl wurden über den vorgeschlagenen Ansatz p=N/2+1 bzw. p=N/2-1 ausgewählt. Dadurch ergeben sich in den jeweiligen Wicklungssträngen, die für einen Drehfeldmotor benötigten, um 360 Grad durch die Anzahl der Stränge (was in diesem Fall zu 72 Grad führt) phasenverschobenen induzierten Spannungen, welche bedingt durch eine geringe Sehnung sehr hoch ausfallen und eine gute Motorausnutzung implizieren.

Im Allgemeinen wird festgehalten:

Die Forschungstätigkeit die zu dieser Erfindung führte, wurde im Rahmen des EU-Programms "Regionale Wettbewerbsfähigkeit OÖ 2007-2013 (Regio 13)" aus Mitteln des Europäischen Fonds für Regionale Entwicklung (EFRE) sowie aus Mitteln des Landes Oberösterreich gefördert.

**Patentansprüche**

1. Elektrische Maschine, insbesondere bürstenloser Torquemotor, mit einem drehbar gelagerten Läufer (10), der mindestens einen Permanentmagneten (11) aufweist, und mit einem, elektromagnetische Pole (4) ausbildenden Stator (3), der ein wenigstens magnetisch leitfähiges Joch (5) und wenigstens vier unterschiedliche Wicklungsstränge (6, 7, 8, 9) einer Statorwicklung (2) aufweist, wobei diese Wicklungsstränge (6, 7, 8, 9) mit mindestens einem Permanentmagneten (11) des Läufers (10) zur gleichzeitigen Ausbildung eines Drehmoments (12) und einer Querkraft (13) zusammenwirken, **dadurch gekennzeichnet, dass** die Wicklungsstränge (6, 7, 8, 9) je mindestens zwei elektrisch miteinander verbundene Spulen (6', 6" bzw. 7', 7" bzw. 8', 8" bzw. 9', 9") aufweisen, wobei bei wenigstens einem Wicklungsstrang (6, 7, 8, 9) seine Spulen (6', 6" bzw. 7', 7" bzw. 8', 8" bzw. 9', 9"), vorzugsweise bei allen Wicklungssträngen (6, 7, 8, 9) deren jeweiliger Spulen (6', 6" und 7', 7" und 8', 8" und 9', 9"), innerhalb einer Statoreinteilung (14) von 360 Grad geteilt durch die Anzahl an Wicklungssträngen (6, 7, 8, 9) angeordnet sind.

2. Elektrische Maschine nach Anspruch 1, **dadurch gekennzeichnet, dass** zwischen Läufer (10) und Stator (3) eine magnetische Lagerung (24) vorgesehen ist, wobei die durch ein Zusammenwirken von Wicklungssträngen (6, 7, 8, 9) und Permanentmagneten (11) erzeugte Querkraft (13) eine Tragkraft für die magnetische Lagerung (24) ausbildet.

**3.** Elektrische Maschine nach Anspruch 1 oder 2, **dadurch gekennzeichnet, dass** die Wicklungsstränge (6, 7, 8, 9) als nutenlose Luftspaltwicklung ausgeführt sind.

**4.** Elektrische Maschine nach Anspruch 1 oder 2, **dadurch gekennzeichnet, dass** die Statorwicklung (2) als Zahnspulenwicklung einschichtig oder zweischichtig ausgeführt ist.

**5.** Elektrische Maschine nach einem der Ansprüche 1 bis 4, **dadurch gekennzeichnet, dass** die Wicklungsstränge (6, 7, 8, 9) in einer Sternschaltung (25), vorzugsweise mit herausgeführtem Sternpunkt (26), elektrisch miteinander verbunden sind.

**6.** Elektrische Maschine nach einem der Ansprüche 1 bis 5, **dadurch gekennzeichnet, dass** wenigstens ein Permanentmagnet (41, 11) an der Läuferoberfläche (10') befestigt und/oder im Läufer (10) eingebettet ist.

**7.** Elektrische Maschine nach einem der Ansprüche 1 bis 6, **dadurch gekennzeichnet, dass** ein halbachmagnetisierter, vorzugsweise einstückiger Permanentmagnet (11) den Läufer (10) ausbildet.

**8.** Elektrische Maschine nach einem der Ansprüche 1 bis 7, **dadurch gekennzeichnet, dass** der Läufer (10) eine sich in Abhängigkeit des Rotorwinkels verändernde Reluktanz aufweist.

**9.** Elektrische Maschine nach einem der Ansprüche 1 bis 8, **dadurch gekennzeichnet, dass** an wenigstens eine Statoreinteilung (14, 17, 30, 36) mindestens ein Sensor (27), insbesondere ein Positions- und/oder ein Drehwinkelsensor, anschließt.

**10.** Elektrische Maschine nach einem der Ansprüche 1 bis 9, **dadurch gekennzeichnet, dass** der Läufer (10, 34) als Innen- oder Außenläufer ausgebildet ist.

**11.** Elektrische Maschine nach einem der Ansprüche 1 bis 10, **dadurch gekennzeichnet, dass** zwischen der Anzahl der Nuten (N) und der Anzahl der Rotorpolpaare (p) die Beziehung

$$p=N/2+1 \text{ oder } p=N/2-1$$

für eine gerade Anzahl an Nuten (N) bzw.

$$p=(N+1)/2 \text{ oder } p=(N-1)/2$$

für eine ungerade Anzahl an Nuten (N) gilt, wenn die Anzahl der Nuten (N) ein ganzzahliges Vielfaches der Anzahl der Wicklungsstränge (m) ist.

**12.** Elektrische Maschine nach einem der Ansprüche 1 bis 10, **dadurch gekennzeichnet, dass** zwischen der Anzahl der Nuten (N) und der Anzahl der Rotorpolpaare (p) die Beziehung p=N/2 gilt, wenn die Anzahl der Nuten (N) ein ganzzahliges Vielfaches der Anzahl der Wicklungsstränge (m) ist.

**13.** Elektrische Maschine nach einem der Ansprüche 1 bis 12, **dadurch gekennzeichnet, dass** der Luftspalt (43) zwischen der Läuferoberfläche (10') und dem Stator (3, 35, 38) derart verläuft, dass eine Reduktion eines Rastmoments eintritt, insbesondere einem sinusförmigen Verlauf der Läuferoberfläche (10'), gebildet wenigstens teilweise durch die jeweiligen Permanentmagneten (11), folgt.

## Claims

**1.** Electrical machine, in particular brushless torque motor, having a rotatably mounted rotor (10) which has at least one permanent magnet (11), and having a stator (3) which forms electromagnetic poles (4) and has an at least magnetically conductive yoke (5) and at least four different winding strands (6, 7, 8, 9) of a stator winding (2), wherein these winding strands (6, 7, 8, 9) interact with at least one permanent magnet (11) of the rotor (10) for simultaneously forming a torque (12) and a transverse force (13), **characterized in that** the winding strands (6, 7, 8, 9) each comprise at least two coils (6', 6" or 7', 7" or 8', 8" or 9', 9") which are electrically connected to each other, wherein its coils (6', 6" or 7', 7" or 8', 8" or 9', 9") in at least one winding strand (6, 7, 8, 9), preferably in all winding strands (6, 7, 8, 9) of their respective coils (6', 6" and 7', 7" and 8', 8" and 9', 9"), are arranged within a stator division (14) of 360 degrees divided by the number of winding strands (6, 7, 8, 9).

**2.** Electrical machine according to claim 1, **characterized in that** a magnetic bearing (24) is provided between the rotor (10) and stator (3), wherein the transverse force (13) generated by an interaction of winding strands (6, 7, 8, 9) and permanent magnets (11) forms a load capacity for the magnetic bearing (24).

**3.** Electrical machine according to claim 1 or 2, **characterized in that** the winding strands (6, 7, 8, 9) are designed as slotless air gap winding.

**4.** Electrical machine according to claim 1 or 2, **characterized in that** the stator winding (2) is designed as a single-layer or double-layer tooth coil winding.

**5.** Electrical machine according to one of claims 1 to 4, **characterized in that** the winding strands (6, 7, 8, 9) are electrically connected to one another in a star connection (25), preferably with the star point (26) led out.

**6.** Electrical machine according to one of claims 1 to 5, **characterized in that** at least one permanent magnet (41, 11) is fixed to the rotor surface (10') and/or embedded in the rotor (10).

**7.** Electrical machine according to one of claims 1 to 6, **characterized in that** a half-axis magnetized, preferably integral permanent magnet (11) forms the rotor (10).

**8.** Electrical machine according to one of claims 1 to 7, **characterized in that** the rotor (10) has a reluctance which changes as a function of the rotor angle.

**9.** Electrical machine according to one of claims 1 to 8, **characterized in that** at least one sensor (27), in particular a position and/or an angle of rotation sensor, adjoins at least one stator division (14, 17, 30, 36).

**10.** Electrical machine according to one of claims 1 to 9, **characterized in that** the rotor (10, 34) is designed as an internal or external rotor.

**11.** Electrical machine according to one of claims 1 to 10, **characterized in that** between the number of grooves (N) and the number of rotor pole pairs (p) the relationship

$$p=N/2+1 \text{ or } p=N/2-1$$

for an even number of grooves (N) or

$$p=(N+1)/2 \text{ or } p=(N-1)/2$$

for an odd number of grooves (N) applies when the number of grooves (N) is an integer multiple of the number of winding strands (m).

**12.** Electrical machine according to one of claims 1 to 10, **characterized in that** the relationship p=N/2 applies between the number of grooves (N) and the number of rotor pole pairs (p) when the number of grooves (N) is an integer multiple of the number of winding strands (m).

**13.** Electrical machine according to one of claims 1 to 12, **characterized in that** the air gap (43) between the rotor surface (10') and the stator (3, 35, 38) extends in such a way that a reduction of a detent torque occurs, in particular follows a sinusoidal course of the rotor surface (10'), formed at least partially by the respective permanent magnets (11).

**Revendications**

**1.** Machine électrique, en particulier moteur couple sans balais, comportant un rotor (10) monté rotatif, qui présente au moins un aimant permanent (11) et un stator (3) qui forme des pôles électromagnétiques (4) et qui présente une culasse (5) conductrice au moins magnétiquement et au moins quatre enroulements de phase (6, 7, 8, 9) différents d'un enroulement statorique (2), ces enroulements de phase (6, 7, 8, 9) coopérant avec au moins un aimant permanent (11) du rotor (10) pour former simultanément un couple (12) et une force transversale (13), **caractérisée en ce que** les enroulements de phase (6, 7, 8, 9) présentent chacun au moins deux bobines (6', 6" ou 7', 7" ou 8', 8" ou 9', 9"), les bobines (6', 6" ou 7', 7" ou 8', 8" ou 9', 9') d'au moins un enroulement de phase (6, 7, 8, 9), de préférence les bobines respectives (6', 6" et 7', 7" et 8', 8" et 9', 9") de tous les enroulements de phase (6, 7, 8, 9) étant disposées à l'intérieur d'une division de stator (14) de 360 degrés divisés par le nombre d'enroulements de phase (6, 7, 8, 9).

**2.** Machine électrique selon la revendication 1, **caractérisée en ce qu'**un palier magnétique (24) est prévu entre le rotor (10) et le stator (3), la force transversale (13) produite par une coopération d'enroulements de phase (6, 7, 8, 9) et d'aimants permanents (11) formant une force portante pour le palier magnétique (24).

**3.** Machine électrique selon la revendication 1 ou 2, **caractérisée en ce que** les enroulements de phase (6, 7, 8, 9) sont réalisés sous la forme d'un enroulement à entrefer sans encoches.

**4.** Machine électrique selon la revendication 1 ou 2, **caractérisée en ce que** l'enroulement statorique (2) est réalisé sous la forme d'un enroulement à bobines dentées en une ou deux couches.

**5.** Machine électrique selon l'une des revendications 1 à 4, **caractérisée en ce que** les enroulements de phase (6, 7, 8, 9) sont reliés électriquement les uns aux autres dans un couplage en étoile (25), de préférence avec le point neutre (26) mené vers l'extérieur.

**6.** Machine électrique selon l'une des revendications 1 à 5, **caractérisée en ce qu'**au moins un aimant permanent (41, 11) est fixé à la surface du rotor (10') et/ou intégré dans le rotor (10).

7. Machine électrique selon l'une des revendications 1 à 6, **caractérisée en ce qu'**un aimant permanent (11) à magnétisation Halbach, de préférence d'une seule pièce, forme le rotor (10).

8. Machine électrique selon l'une des revendications 1 à 7, **caractérisée en ce que** le rotor (10) présente une réluctance qui varie en fonction de l'angle de rotor.

9. Machine électrique selon l'une des revendications 1 à 8, **caractérisée en ce qu'**au moins un capteur (27), en particulier un capteur de position et/ou un capteur d'angle de rotation, est adjacent à au moins une division de stator (14, 17, 30, 36).

10. Machine électrique selon l'une des revendications 1 à 9, **caractérisée en ce que** le rotor (10, 34) est réalisé sous la forme d'un rotor intérieur ou extérieur.

11. Machine électrique selon l'une des revendications 1 à 10, **caractérisée en ce qu'**entre le nombre d'encoches (N) et le nombre de paires de pôles de rotor (p) s'applique la relation

$$p=N/2+1 \text{ ou } p=N/2-1$$

pour un nombre pair d'encoches (N) ou

$$p=(N+1)/2 \text{ ou } p=(N-1)/2$$

pour un nombre impair d'encoches (N),
lorsque le nombre d'encoches (N) est un multiple entier du nombre d'enroulements de phase (m).

12. Machine électrique selon l'une des revendications 1 à 10, **caractérisée en ce qu'**entre le nombre d'encoches (N) et le nombre de paires de pôles de rotor (p) s'applique la relation p=N/2 lorsque le nombre d'encoches (N) est un multiple entier du nombre d'enroulements de phase (m).

13. Machine électrique selon l'une des revendications 1 à 12, **caractérisée en ce que** l'entrefer (43) entre la surface de rotor (10') et le stator (3, 35, 38) s'étend de telle manière qu'une réduction d'un couple de saillance se produise, en particulier suive un tracé sinusoïdal de la surface de rotor (10'), formé au moins partiellement par les aimants permanents (11) respectifs.

FIG.1

**FIG.2**

FIG.3

FIG.4

# FIG.5

*FIG.6*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19726352 A
- EP 1301979 B1

- DE 2537597